(19) Europäisches Patentamt / European Patent Office / Office européen des brevets

(11) **EP 3 928 058 B1**

(12) **FASCICULE DE BREVET EUROPEEN**

(45) Date de publication et mention de la délivrance du brevet:
**18.01.2023 Bulletin 2023/03**

(21) Numéro de dépôt: **20704877.8**

(22) Date de dépôt: **14.02.2020**

(51) Classification Internationale des Brevets (IPC):
**G01B 11/24** (2006.01)     **G01B 21/20** (2006.01)

(52) Classification Coopérative des Brevets (CPC):
**G01B 11/24; G01B 21/20**

(86) Numéro de dépôt international:
**PCT/EP2020/053950**

(87) Numéro de publication internationale:
**WO 2020/169480 (27.08.2020 Gazette 2020/35)**

(54) **PROCEDE DE CONTRÔLE D'UNE PIECE EN MATERIAU COMPOSITE**

**VERFAHREN ZUR INSPEKTION EINER KOMPONENTE AUS VERBUNDMATERIAL**

**METHOD FOR INSPECTING A COMPOSITE-MATERIAL COMPONENT**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.02.2019 FR 1901691**

(43) Date de publication de la demande:
**29.12.2021 Bulletin 2021/52**

(73) Titulaire: **Institut de Recherche Technologique Jules Verne**
**44340 Bouguenais (FR)**

(72) Inventeurs:
• **TARDIF, Xavier**
  **44200 Nantes (FR)**
• **MARCHAND, Christophe**
  **44400 Rezé (FR)**

(74) Mandataire: **Nony**
**11 rue Saint-Georges**
**75009 Paris (FR)**

(56) Documents cités:
**US-A- 4 629 319**

• **XAVIER TARDIF ET AL: "Hot forming of composite prepreg : Experimental study", AIP CONFERENCE PROCEEDINGS, vol. 1892, 16 octobre 2017 (2017-10-16), pages 030028-1, XP055642077, NEW YORK, US ISSN: 0094-243X, DOI: 10.1063/1.5008015**

**Description**

**Domaine technique**

La présente invention concerne le contrôle des pièces réalisées en matériau composite et ayant subi un formage, notamment un formage à chaud, et en particulier un procédé de contrôle de telles pièces.

**Technique antérieure**

Lorsqu'une pièce en matériau composite, réalisée à l'aide de plis, est pliée par formage, notamment à chaud, les plis glissent les uns par rapport aux autres, et un bord de la pièce, qui était net dans un plan perpendiculaire à l'axe longitudinal du bord avant formage, forme un profil en escalier, que l'on appelle « sifflet ».

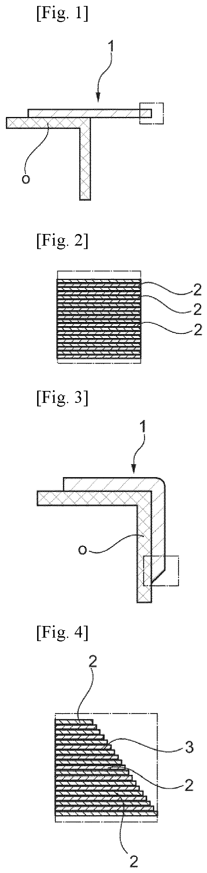

Les figures 1 et 3 illustrent une pièce 1 sous forme de panneau, réalisée en matériau composite à l'aide de plis 2 superposés. La figure 1 illustre le panneau avant pliage par formage à chaud. Le détail, sur la figure 2, montre le bord du panneau, rectiligne. La figure 3 illustre le panneau après pliage par formage à chaud sur un outil O. Le détail sur la figure 4 montre le bord 3 du panneau, avec le profil en escalier.

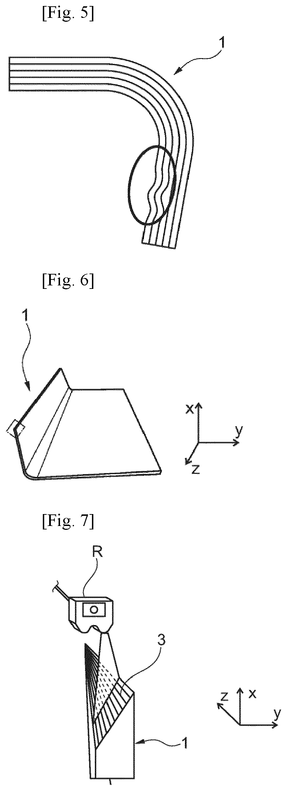

Lors du formage, il est possible que des défauts apparaissent à l'intérieur de la pièce 1. La figure 5 montre un exemple de défaut pouvant apparaître, mis en évidence par un cadre ovale. Ces défauts consistent dans cet exemple en des ondulations se formant dans l'épaisseur de la pièce 1 et sur la surface intérieure de la pièce 1 du côté de l'outil O, donc non visible lorsqu'en place sur l'outil O, même si la surface extérieure, visible, reste nette et sans défauts. De telles ondulations peuvent apparaître à une épaisseur quelconque dans la pièce.

Le contrôle des pièces est réalisé visuellement par l'opérateur. Comme on peut le comprendre en regardant les figures 1 à 5, l'opérateur ne peut pas aisément visualiser les défauts visibles le cas échéant du côté de l'outil O de formage sauf à manipuler la pièce pour la sortir de l'outillage et la retourner. Les pièces sont généralement de grandes dimensions et de poids élevé, de telle sorte qu'il n'est pas facile de les manipuler sans machine.

Ainsi, il est souhaitable de pouvoir contrôler une pièce en matériau composite alors que la pièce est encore en place sur l'outil O de formage.

La publication de Xavier Tardif, et al. « Hot forming of Composite prepreg : experimental study » présente une étude sur les défauts de pièces, formées de plusieurs plis, pliées par formage à chaud.

Il existe donc un besoin de permettre le contrôle de la pièce en matériau composite après formage, notamment à chaud, pour détecter la présence de défauts éventuels dans la pièce du fait du formage, sans avoir à sortir la pièce de l'outil de formage.

**Exposé de l'invention**

La présente invention parvient à résoudre tout ou partie de ce besoin et concerne ainsi un procédé de contrôle d'une pièce en matériau composite comportant une pluralité de plis, ayant subi un formage et présentant au moins un bord s'étendant selon un axe longitudinal Z et ayant, suite au formage, un profil en escalier dans un plan (X, Y) orthogonal à l'axe longitudinal Z, le procédé comportant les étapes suivantes :

   a) acquérir des données relatives au profil en escalier,
   b) calculer, à partir des données acquises, au moins une valeur parmi les suivantes en au moins un point z de l'axe longitudinal Z : angle du profil, longueur du profil, nombre de pics sur un tracé de la fonction dérivée du profil, coordonnées des pics sur le tracé de la fonction dérivée du profil, calcul de la distance entre deux pics successifs ($\Delta x$) sur le tracé de la fonction dérivée du profil et calcul de la hauteur desdits pics, et éventuellement calculer au moins un critère basé sur au moins une de ces valeurs,
   c) comparer la ou les valeur(s) calculée(s) et/ou critère(s) et/ou une ou plusieurs valeur(s) moyenne(s) ou critère(s) moyen(s) en plusieurs points (z) avec des valeurs ou critères de référence correspondants calculés,
   d) générer une information sur le risque de la présence ou l'absence de défauts dans la pièce, sur la base de ladite comparaison.

Grâce à l'invention, il est possible, en mettant en œuvre le procédé, de mettre en évidence, par l'analyse du profil en escalier, la vraisemblable présence de défauts de type ondulations dans la pièce, notamment le panneau, sur la face en contact avec l'outillage, face qui est cachée lors du formage et après celui-ci, pour l'opérateur, en l'absence de manipulation de la pièce. L'invention permet donc un contrôle automatique des pièces après le formage sans avoir à sortir la pièce de l'outil. Les défauts apparaissant peuvent ainsi être détectés automatiquement après le formage, par mise en œuvre du procédé selon l'invention.

L'acquisition des données relatives au profil en escalier est avantageusement effectuée à l'aide d'un profilomètre laser. Grâce à l'utilisation du profilomètre laser, on bénéficie en effet d'une mesure sans contact et très rapide.

Le procédé peut comporter l'étape consistant, après l'étape a) d'acquisition, à reconstituer, en ledit au moins un point (z), la forme géométrique du profil à l'aide des données acquises, et en déduire le tracé d'une fonction dérivée du profil. L'étape de traitement de données peut comporter le calcul, en ledit au moins un point (z) de l'axe longitudinal Z, de l'épaisseur du profil et l'étape de comparaison peut alors consister à comparer une valeur d'épaisseur de référence calculée et la valeur d'épaisseur calculée.

Par épaisseur du profil en un point (z), on entend la distance sur l'axe Y dans le plan (X, Y) entre les projections sur cet axe des deux extrémités du profil dans ce plan. L'épaisseur de référence correspond à l'épaisseur initiale de la pièce, notamment de la plaque avant formage, et est égale à l'épaisseur d'un pli unitaire multiplié par le nombre de plis.

Si l'épaisseur du profil en escalier est différente de l'épaisseur de référence, il y a un risque de non-qualité, c'est-à-dire de présence de défauts dans la pièce composite. L'écart admissible autour de la valeur théorique pour l'épaisseur du profil est de +/-lmm, de préférence +/- 0,1 mm.

L'étape de traitement de données peut comporter le calcul, en ledit au moins un point (z) de l'axe longitudinal Z, de la longueur du profil et l'étape de comparaison peut alors consister à comparer une valeur de longueur de référence calculée et la valeur de longueur calculée.

Par longueur du profil en un point (z), ou « longueur du sifflet », on entend la distance sur l'axe X dans le plan (X, Y) entre les projections sur cet axe des deux extrémités du profil dans ce plan. La longueur de référence du profil est égale à l'épaisseur de référence du profil multipliée par le nombre $\pi$ multipliée par l'angle de pliage par formage et divisée par 180°.

Si la longueur du profil en escalier est différente de la longueur de référence, il y a un risque de non-qualité, c'est-à-dire de présence de défauts dans la pièce composite. L'écart admissible autour de la valeur théorique (c'est-à-dire de référence) pour la longueur du profil (ou longueur du sifflet) est de +/- 50% de la valeur théorique, de préférence +/-10% de la valeur théorique.

L'étape de traitement de données peut comporter le calcul, en ledit au moins un point (z) de l'axe longitudinal Z, de la longueur de l'hypoténuse du profil et l'étape de comparaison peut alors consister à comparer une valeur de longueur de référence calculée et la valeur de longueur calculée.

Par longueur de l'hypoténuse du profil en un point (z), on entend la distance dans le plan (X, Y) entre les deux extrémités du profil dans ce plan.

La longueur de l'hypoténuse peut être calculée selon la formule : longueur hypoténuse = ((longueur du profil)$^2$+(épaisseur)$^2$)$^{\wedge 0.5}$.

La longueur du profil peut être calculée selon la formule : longueur sifflet = ((longueur hypoténuse)$^2$- (épaisseur)$^2$)$^{\wedge 0.5}$.

Si la longueur de l'hypoténuse du profil en escalier est différente de la longueur de référence, il y a un risque de non-qualité, c'est-à-dire de présence de défauts dans la pièce composite. L'écart admissible autour de la valeur théorique pour la longueur de l'hypoténuse du profil est de +/-50% de la longueur théorique, de préférence +/- 10% de la longueur théorique.

L'étape de traitement des données comporte de préférence le calcul, en ledit au moins un point (z) de l'axe longitudinal Z, de l'angle du profil et l'étape de comparaison peut alors consister à comparer une valeur d'angle de référence calculée et la valeur d'angle calculée.

Par angle du profil, on entend l'angle d'inclinaison du profil par rapport aux surfaces de la pièce en matériau composite, correspondant à la pente moyenne du profil obtenu. L'angle du profil est égal à atan*(épaisseur/longueur du sifflet).

Si, après mise en œuvre du procédé, on détermine que l'angle calculé est différent de l'angle de référence, il y a un risque de non-qualité liée à un problème pendant le formage. L'écart admissible autour de la valeur théorique pour l'angle du profil est de +/-5°, de préférence +/- 0,5°.

L'étape de traitement de données peut comporter, en ledit au moins un point (z) de l'axe longitudinal Z, l'identification des pics et le calcul du nombre de pics sur le tracé de la fonction dérivée du profil, et l'étape de comparaison peut alors consister à comparer une valeur de référence de nombre de pics calculée et la valeur du nombre de pics calculée.

Le profil correspond à une fonction f (x). La fonction dérivée du profil est une fonction f' (x). Le tracé de cette dernière peut présenter des pics. Par pic, on comprend un maximum local sur le tracé de la fonction dérivée du profil.

Le nombre de pics n doit, en théorie, correspondre environ au nombre de plis $n_{plis}$ dans le panneau moins un, c'est-à-dire n= $n_{plis}$-1. Si le nombre est différent, cela signifie qu'il y a eu un phénomène de glissement par paquets de plis, ce qui peut générer une non-qualité de la pièce composite. L'écart admissible par rapport à la valeur théorique pour le nombre de pics est de 60% du nombre de pics théorique, de préférence 90% du nombre de pics théorique.

L'étape de traitement de données peut comporter le calcul, en ledit au moins un point (z) de l'axe longitudinal Z, de la distance entre deux pics successifs, pour au moins une partie des pics sur le tracé de la fonction dérivée du profil, et l'étape de comparaison peut alors consister à comparer une valeur de distance de référence calculée et la valeur des distances calculées entre les pics, deux à deux.

Si la distance Δx entre pics successifs est différente de la valeur de référence, il y a un risque de non-qualité lié à un glissement par paquets de plis.

L'étape de traitement de données peut comporter le calcul des valeurs de distance entre deux pics successifs Δx et la hauteur des marches du profil en escalier Δy, ainsi que le calcul d'un critère J, tel que

[Math 1]

$$J = \sum_{pic=0}^{n} ((\Delta x - \Delta x_{id})^2 - (\Delta y - \Delta y_{id})^2)$$

où $\Delta x_{id}$ et $\Delta y_{id}$ sont les valeurs de référence des distances Δx et Δy avec Δx= longueur du sifflet/nombre de plis ; Δy hauteur du sifflet/nombre de plis ; $\Delta x_{id}$ = longueur du sifflet idéale/nombre de plis et $\Delta y_{id}$ = hauteur du sifflet idéale/nombre de plis.

Ce critère a été défini pour évaluer la dispersion des couples (Δx, Δy) autour du couple ($\Delta x_{id}$, $\Delta y_{id}$), où ($\Delta x_{id}$, $\Delta y_{id}$) désigne les valeurs idéales. Une valeur de J proche de zéro signifie donc que la pièce est saine alors qu'une valeur élevée suggère une non-qualité.

La valeur admissible pour $J_{pic}$, $J_{pic}$ = J/nombre de pics, est $J_{pic} < 2$ mm$^2$, de préférence $J_{pic} < 1$ mm$^2$.

Les valeurs et critères mentionnés plus haut, ou partie de ceux-ci, sont de préférence calculés, en ledit au moins un point (z) de l'axe longitudinal Z, et comparés aux valeurs et critères de référence correspondants, de manière à permettre la détection de défauts dans la pièce en matériau composite après formage.

Les étapes du procédé de contrôle peuvent être répétées en au moins deux points différents du bord ayant un profil en escalier, voire en au moins trois points, notamment en sept points, mieux en une pluralité de points à intervalles réguliers sur toute la longueur du bord, de préférence prédéterminés. En particulier, l'acquisition des données peut se faire en différents points, notamment prédéterminés, puis le traitement des données est effectué pour chacun de ces points. En variante, les étapes sont répétées sur toute la longueur du bord ayant un profil en escalier de la pièce composite, voire sur tous les côtés de la pièce composite. Dans ce dernier cas, le bord ayant un profil en escalier ou sifflet peut être scanné sur toute sa longueur et les données traitées en tout point du bord ou à des points à intervalles réguliers, par exemple tous les 0,05 mm.

En cas d'acquisition de données en différents points sur le bord avec un profil en escalier, une moyenne des valeurs ou critères pour les points différents peut être calculée afin d'effectuer la comparaison avec la valeur ou critère de référence correspondant. Un écart-type peut être pris en considération. En faisant l'analyse tout le long du bord ou sifflet, cela permet de localiser le défaut potentiel.

Le formage consiste avantageusement en un formage à chaud, notamment en un pliage à chaud. En variante, le formage peut être réalisé à température ambiante, si la résine utilisée permet un formage sans chauffe particulière.

Le formage peut être assuré mécaniquement.

La pièce en matériau composite peut former un panneau composite ou autre, par exemple une cornière.

La pièce en matériau composite peut comporter au moins dix plis drapés superposés, mieux au moins vingt plis, encore mieux au moins cinquante plis.

Les plis peuvent présenter une structure choisie dans le groupe constitué par une structure linéique, notamment des fils ou des mèches, surfacique, notamment des non-tissés, des tissus, des rubans ou des mats, ou multidirectionnelle, notamment des tresses, des tissus complexes, des tissages multi-directionnels, notamment tri-directionnels ou plus.

Les plis peuvent être non-tissés, encore appelé en anglais Non-Crimp Fabrics (NCF). Dans ce cas, chaque pli comporte une pluralité de couches de fibres unidirectionnelles, disposées les unes sur les autres avec une orientation angulaire différente des fibres, par exemple selon une séquence 0/+-45°/90°. En variante ou de manière additionnelle, les plis peuvent être tissés. Le terme « tissé » couvre des structures variées de tissage, de tressage, plus ou moins complexes, pouvant en particulier être tridimensionnelles. De manière connue en soi, le tissage peut être une toile, un sergé, un satin, un unidirectionnel, une fausse gaze ou autre.

Les fibres constituant les plis peuvent être choisies dans le groupe constitué par les fibres de carbone, de verre, les fibres d'aramide, les fibres céramiques, les fibres de polyester, les fibres d'origine végétale, notamment les fibres de lin, de préférence les fibres de carbone ou de verre, et un mélange de celles-ci. Les fibres peuvent être continues ou courtes.

Les plis peuvent être pré-imprégnés. Dans ce cas, la matrice les imprégnant peut être choisie parmi les matrices de polymères thermodurcissables, notamment les résines époxydes, les matrices de polymères thermoplastiques.

Dans un mode de réalisation particulier, le matériau composite comporte des fibres de carbone pré-imprégnées d'une matrice en résine époxyde, avec des plis unidirectionnels orientés à [0°;45°;90°;135°].

**Brève description des dessins**

L'invention pourra être mieux comprise à la lecture de la description détaillée qui va suivre, d'exemples de mise en œuvre non limitatifs de celle-ci, et à l'examen du dessin annexé, sur lequel :

[Fig 1] est une vue schématique en coupe transversale d'une pièce en matériau composite et d'un outil de formage, avant pliage,

[Fig 2] est une vue schématique en coupe transversale d'un détail du bord de la pièce de la figure 1,

[Fig 3] est une vue schématique en coupe transversale de la pièce et de l'outil de la figure 1 après pliage,

[Fig 4] est une vue schématique en coupe transversale d'un détail du bord de la pièce de la figure 3,

[Fig 5] est une vue schématique et partielle, en coupe transversale, d'un exemple de pièce en matériau composite après pliage,

[Fig 6] est une vue schématique, en perspective, d'un exemple de pièce en matériau composite, après pliage, pouvant être contrôlée à l'aide du procédé selon l'invention,

[Fig 7] est une vue schématique de la mise en œuvre d'une étape d'acquisition de données du procédé selon l'invention,

[Fig 8] est un graphe de référence de la forme géométrique du bord avec profil en escalier d'une pièce en matériau composite après formage,

[Fig 9] est un graphe de référence de la fonction dérivée de la forme géométrique du profil de la figure 8,

[Fig 10] est une vue schématique, en perspective, d'un exemple de pièce en matériau composite avant formage,

[Fig 11] représente respectivement des exemples de graphes réels de la forme géométrique du bord avec profil en escalier et de la fonction dérivée de celle-ci, de la pièce en matériau composite de la figure 3 après formage dans certaines conditions,

[Fig 12] est un graphe représentant la longueur moyenne du profil, calculée à partir de longueurs de profil mesurées pour différentes pièces similaires à celle de la figure 3 ayant subi le formage dans différentes conditions,

[Fig 13] est un graphe représentant le nombre moyen de pics de la fonction dérivée du profil, calculé pour différentes pièces similaires à celle de la figure 10 ayant subi le formage dans différentes conditions, et

[Fig 14] est un graphe représentant un critère J, calculé pour différentes pièces similaires à celle de la figure 3 ayant subi le formage dans différentes conditions.

**Description détaillée**

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites.

On a représenté sur la figure 6 un exemple de pièce en matériau composite sous forme d'une plaque ayant subi un formage, dans cet exemple un formage à chaud, pour réaliser un pliage, qui a créé au moins un bord avec un profil en escalier, dont une partie est visible plus en détail sur la figure 7. Le formage à chaud peut être mis en œuvre à l'aide de l'outillage et du procédé décrits dans FR 3 043 358.

Le procédé selon l'invention permet de contrôler la qualité de la pièce en réalisant les étapes suivantes. La première étape, illustrée sur la figure 7, consiste à acquérir des données relatives au profil en escalier du bord 3 en au moins un point z de l'axe longitudinal Z selon lequel s'étend le bord 3, notamment en une pluralité de points de l'axe Z espacés dans cet exemple de 0,05 mm. Cette acquisition est effectuée dans cet exemple par un profilomètre laser R, visible sur la figure 7, par exemple un profilomètre laser commercialisé sous le nom KEYENCE® série LJ-V7200, monté sur un bâti rigide, mais mobile selon un axe parallèle au bord. Le profilomètre peut être un scanner. Les données sont dans cet exemple acquises en en une pluralité de points de l'axe Z espacés dans cet exemple de 0,05 mm. La figure 7 illustre l'acquisition des données relatives au profil en escalier en un point z particulier sur le bord 3.

Les données acquises permettent de reconstituer la forme géométrique du profil en chaque point du bord 3, voire sur toute la longueur du bord si des mesures sont effectuées en continu sur le bord 3. Elles permettent également, en chacune de ces positions, c'est-à-dire en chaque point z, d'en déduire le tracé d'une fonction dérivée du profil.

Les données sont ensuite, selon le procédé, traitées pour calculer au moins une valeur parmi les suivantes : angle du profil, longueur du profil, nombre de pics sur le tracé de la fonction dérivée du profil, coordonnées des pics sur le tracé de la fonction dérivée du profil, calcul de la distance entre deux pics sur le tracé de la fonction dérivée du profil et calcul de la hauteur desdits pics, comme cela sera décrit ci-après.

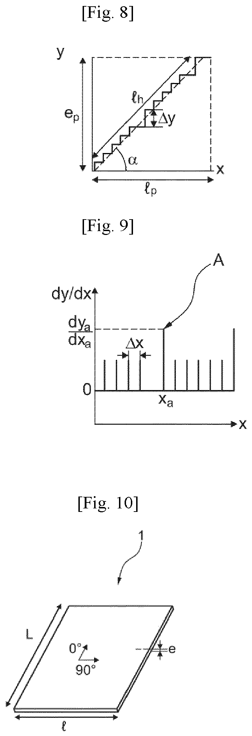

On visualise respectivement sur les figures 8 et 9, un exemple schématique de graphe, pour un point z particulier, d'un profil en escalier, fonction $f(x)=y$ et un exemple schématique de graphe du tracé de la fonction dérivée de ce profil, $f'(x)=df/dx=dy/dx$.

Sur la figure 8, on visualise l'angle $\alpha$ du profil en escalier, la longueur $l_h$ de l'hypoténuse du profil en escalier,

l'épaisseur $e_p$ du profil, et la longueur $l_p$ du profil.

Comme visible sur la figure 9, des pics forment le tracé de la fonction dérivée du profil en escalier. La position des pics sur cette figure 9 coïncident avec la position des marches de l'escalier sur la figure 8. La hauteur des marches est $\Delta y$, voir figure 8, et la distance entre deux pics est $\Delta x$, comme illustré sur la figure 9. La distance entre deux pics renseigne sur la longueur de glissement entre les plis et la hauteur des marches renseigne sur le nombre de plis qui ont glissé conjointement lors du formage. On peut également déterminer les coordonnées $(x_a, dy_a/dx_a)$ de chaque pic A de même que la hauteur de chaque pic.

Ensuite, les valeurs calculées et/ou des critères prédéfinis calculés à partir d'une ou plusieurs de ces valeurs, sont comparés avec des valeurs et/ou critères de référence correspondants calculés, en chaque point.

A la suite de cette comparaison, on peut générer une information sur un risque de la présence ou l'absence de défauts dans la pièce en matériau composite.

Ainsi, selon le procédé selon l'invention, on calcule en une pluralité de points z du sifflet au moins certaines parmi les différentes valeurs ci-dessus. De ces résultats on déduit la présence éventuelle ou non d'un défaut aux points z où les valeurs sont différentes des valeurs théoriques.

Exemples

On a effectué une expérience sur plusieurs pièces en matériau composite telles que celle qui est représentée sur la figure 10. Chacune de ces pièces forme une plaque et comporte 77 plis drapés en 50/20/20/10, c'est-à-dire 50% des plis orientés à 0 °, 20% orientés à -45°, 20% orientés à +45 et 10% des plis orientés à 90°. Les dimensions de chacune des plaques sont : longueur L=1500 mm, largeur l=600 mm, et épaisseur e=19,6 mm. Les plis à 0° sont selon la longueur de la plaque, comme visible sur la figure 10. Il y a 36 plis à 0°, 16 plis à 45°, 16 plis à -45° et 8 plis à 90°.

On effectue pour chacune des plaques un formage à chaud, consistant en un pliage bas, avec un formage de type mécanique. Le formage à chaud peut être mis en œuvre à l'aide de l'outillage et du procédé décrits dans FR 3 043 358. On réalise le pliage vers le bas de manière similaire à la figure 3, d'un angle de 97,5° (tandis que l'angle de pliage est de 90° sur la figure 3), ce qui permet d'obtenir le bord avec un profil en escalier comme sur la figure 3.

On a réalisé huit pliages d'un angle de 97,5° d'une plaque 1 similaire à celle de la figure 3 et on a étudié les profils en escalier obtenus, nommés XP1, XP2, XP3, XP4, XP5, REP 1, REP2 et REP3, pour chacune de ces plaques, selon le procédé de l'invention.

Les expériences XP1-XP4 ont été choisies de manière à modéliser l'apparition de défaut par un polynôme via une approche par plan d'expérience. L'expérience XP5 a permis d'évaluer la validité du modèle car il se situe au centre du plan d'expérience. Les expériences REP1, REP2 et REP3 ont permis d'évaluer la répétabilité du formage mécanique.

Pour chacune des pièces obtenues par formage, le profil en escalier du bord de la plaque est mesuré en sept points du bord : z=50mm, 250mm, 500 mm, 750 mm, 1000mm, 1250 mm et 1450 mm par le profilomètre laser.

A partir des données brutes acquises du profil en escalier du bord, il est possible d'en déduire le profil en escalier du bord en chacun des points z sur lesquels les données ont été acquises et le tracé de la fonction dérivée de ce profil.

Il est également possible de calculer plusieurs grandeurs ou valeurs, notamment l'angle moyen du profil, l'épaisseur et la longueur.

Il est par ailleurs possible de calculer les valeurs théoriques ou valeurs de référence correspondantes et de comparer les valeurs expérimentales avec les valeurs de référence.

Les valeurs théoriques, de référence, sont les suivantes pour ces exemples :

Epaisseur $e_p$ = épaisseur initiale de la plaque 1 avant formage. Dans cet exemple, $e_p$ = 20,6 mm.
Longueur du sifflet = $L_p$ = épaisseur * angle de pliage*$\pi$/180°= $e_p$*a*$\pi$/180°. Dans cet exemple, $L_p$=20,6*97,5°*$\pi$/180°=35,05 mm.
Longueur hypoténuse = $L_h$ = $(l_p^2+e_p^2)^{\wedge 0.5}$=40,65 mm
Angle du profil = $\alpha$ = atan (épaisseur/longueur du sifflet) = atan($e_p/l_p$)= 30,44°
Nombre de pics= nombre de plis - 1 =76

On part des données acquises relatives à un profil du bord dans le plan (X, Y) pour un z donné de l'axe longitudinal Z, pour une plaque donnée, après formage.

On calcule la longueur du sifflet. On calcule également la longueur de l'hypoténuse, en effectuant la dérivée du signal du profilomètre pour ce point z puis en calculant la distance entre le premier pic et le dernier pic du signal dérivé, soit les deux extrémités. Dans le cas présent, on pondère cette distance par cos(7.5°), car on travaille sur une table plate. Le sifflet étant de 97,5° et le profilomètre étant en référence par rapport à la table, on rattrape les 7,5° de la normale. On mesure, dans cet exemple directement du profil, l'épaisseur, et on la pondère par cos(7.5°).

L'angle de la pente du profil est aussi calculé par la relation suivante :

[Math 2]

$$\alpha = \operatorname{atan}(a) * 180 / \pi - 7.5°$$

où $\alpha$ désigne l'angle en [°] et a la pente. On soustrait l'angle de 7.5° (dû à la plaque pliée à 97,5°). La pente désigne le coefficient directeur de la droite qui modélise le mieux le profil. On détermine cette pente par toute méthode telle que la méthode des moindres carré, la méthode des points moyens ou autre méthode convenable.

Pour mesurer ou calculer le nombre de pics du profil en z, on dérive le signal du profilomètre, on identifie les pics par un algorithme de détection de pics, le pic étant un maximum local, et on les compte. Un pic est un point tel que sa valeur est supérieure à la valeur antérieure et à la valeur postérieure. C'est un maximal local. On calcule également un critère pic, dit $J_{pic}$, $J_{pic}$ = J/nombre de pics avec

[Math 3]

$$J = \sum_{pic=0}^{n} ((\Delta x - \Delta x_{id})^2 - (\Delta y - \Delta y_{id})^2)$$

Ce critère permet de calculer un écart de position entre les pics réels et les pics idéaux (de référence, théoriques). Après avoir détecté les pics par l'algorithme de détection de pics, comme expliqué plus haut, on calcule la distance $\Delta x$ entre chaque pic. En ayant identifié les pics via l'algorithme de détection, on calcule la distance entre les pics successifs. On calcule la hauteur $\Delta y$ de chaque pic. Connaissant la position du pic, on calcule l'écart de hauteur sur le signal du profilomètre à la position du pic.

La valeur de référence pour $\Delta x$ est $\Delta x_{id}$= longueur du sifflet/ (nombre de plis-1) = 35,05/76=0.461 mm et la valeur de référence pour $\Delta y$ est $\Delta y_{id}$ = épaisseur/(nombre de plis-1) =0.271 mm dans cet exemple. Le critère J a été défini pour évaluer la dispersion des couples ($\Delta x$, $\Delta y$) autour du couple ($\Delta x_{id}$, $\Delta y_{id}$).

On observe, après manipulation de celles-ci, que les pièces obtenues après formage REP1, REP2, REP3 et XP1 ne présentent pas de défauts tandis que les pièces obtenues après formage XP5, XP2, XP3, XP4 présentent des défauts de type ondulations de plus en plus importants suivant cet ordre.

Les inventeurs ont démontré qu'un risque de la présence ou l'absence de ces défauts dans les pièces est au moins partiellement prévisible sans avoir à manipuler les pièces et de manière automatique. En effet, comme expliqué plus haut, la comparaison des valeurs relatives au profil en escalier du bord calculées à partir des données acquises sur le profil avec des valeurs de référence permet de générer une information sur ce risque.

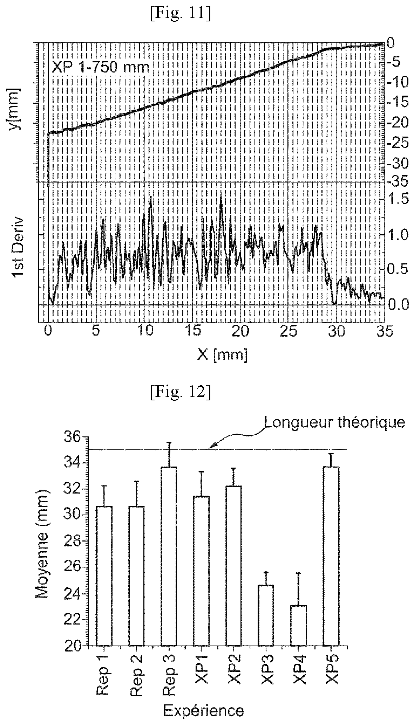

Le profil en escalier du bord du panneau de l'expérience XP1 au point z=750 mm a été représenté à la figure 11 ainsi que sa fonction dérivée. A cette position, la longueur du profil en escalier est de 28 mm, la distance entre deux pics est de 0,36 mm environ, la hauteur du profil en escalier est de 22,25 mm environ. On peut détecter les pics sur le tracé de la fonction dérivée du profil.

En effectuant une acquisition des données pour chacune des plaques 1 en au moins un point z du bord ayant un profil en escalier, après pliage, on peut réaliser différents calculs de valeurs comme indiqué plus haut.

On peut le cas échéant ensuite en faire une moyenne, laquelle a été présentée sur les graphes des figures 12 à 14. On peut, en variante ou de manière additionnelle, faire l'étude pour chacun des points z avec comparaison avec les valeurs de références pour en déduire des informations sur le risque de défaut en ce point z donné.

Sur la figure 12, on visualise, pour chacune des expériences REP1, REP2, REP3, XP1, XP2, XP3, XP4 et XP5, la valeur moyenne des longueurs de profil, ainsi que la longueur de profil de référence $l_p$ de 35,05mm représentée sur le graphe par une ligne en pointillés. On constate que les valeurs moyennes de longueurs des profils présentant le plus de défauts XP3 et XP4 sont les plus éloignées de la longueur de référence $l_p$.

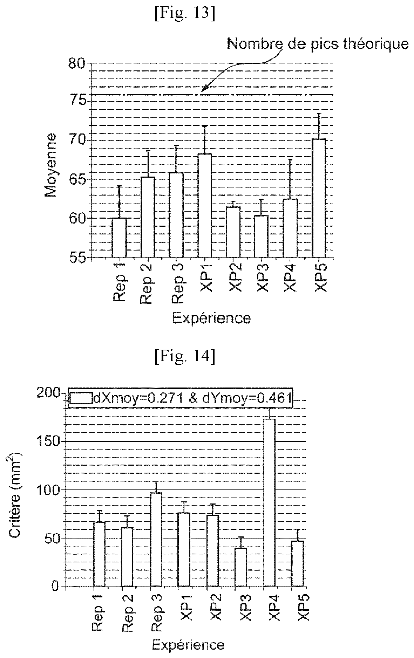

Sur la figure 13, on visualise, pour chacune des expériences, la valeur moyenne du nombre de pics ainsi que la valeur de référence du nombre de pics, qui est de 76 dans cet exemple, représentée par une ligne en pointillés sur la figure. On constate qu'hormis pour les expériences REP1 et XP5, les valeurs les plus éloignées de la valeur de référence sont celles des expériences XP2, XP3 et XP4.

Sur la figure 14, on visualise, pour chacune des expériences, la valeur du critère J précisé ci-dessus basé sur la distance entre les pics.

Les résultats de ce critère en fonction de l'expérience sont tracés sur la figure 14. Pour établir la barre d'erreur, les expériences REP1, REP2, REP3 et XP1 ont été utilisées. On observe que XP3 et XP4 sont respectivement les expériences qui minimisent et maximisent le critère. Ces résultats montrent que les $\Delta x$ et $\Delta y$ mesurés sont très différents des valeurs de référence attendues. Cela souligne également la dispersion des $\Delta x$ et $\Delta y$ autour des valeurs attendues.

On remarque néanmoins que les valeurs de J pour REP1, REP2, REP3, XP1, XP2 et XP5 sont comprises dans le même intervalle et correspondent à des pièces présentant pas ou peu de défauts.

**Revendications**

1. Procédé de contrôle d'une pièce (1) en matériau composite comportant une pluralité de plis (2), ayant subi un formage et présentant au moins un bord (3) s'étendant selon un axe longitudinal (Z) et ayant, suite au formage, un profil en escalier dans un plan (X, Y) orthogonal à l'axe longitudinal (Z), le procédé comportant les étapes suivantes :

   a) acquérir des données relatives au profil en escalier,
   b) calculer, à partir des données acquises, au moins une valeur parmi les suivantes en au moins un point (z) de l'axe longitudinal (Z) : angle du profil, longueur du profil, nombre de pics sur un tracé de la fonction dérivée du profil, coordonnées des pics sur le tracé de la fonction dérivée du profil, calcul de la distance entre deux pics successifs (∆x) sur le tracé de la fonction dérivée du profil et calcul de la hauteur desdits pics, et éventuellement calculer au moins un critère basé sur au moins une de ces valeurs,
   c) comparer la ou les valeur(s) calculée(s) et/ou critère(s) et/ou une ou plusieurs valeur(s) moyenne(s) ou critère(s) moyen(s) en plusieurs points (z) avec des valeurs ou critères de référence correspondants calculés,
   d) générer une information sur le risque de la présence ou l'absence de défauts dans la pièce (1), sur la base de ladite comparaison.

2. Procédé selon la revendication 1, dans lequel l'acquisition des données relatives au profil en escalier est effectuée à l'aide d'un profilomètre laser (R).

3. Procédé selon la revendication 1 ou 2 comprenant l'étape consistant, après l'étape a) d'acquisition, à reconstituer, en ledit au moins un point (z), la forme géométrique du profil à l'aide des données acquises, et en déduire le tracé d'une fonction dérivée du profil.

4. Procédé selon l'une quelconque des revendications précédentes, dans lequel le traitement de données comporte le calcul, en ledit au moins un point (z) de l'axe longitudinal (Z), de l'angle du profil et la comparaison consiste à comparer une valeur d'angle de référence calculée et la valeur d'angle calculée.

5. Procédé selon l'une quelconque des revendications précédentes, dans lequel le traitement de données comporte le calcul, en ledit au moins un point (z) de l'axe longitudinal (Z), de la longueur du profil et la comparaison consiste à comparer une valeur de longueur de référence calculée et la valeur de longueur calculée.

6. Procédé selon l'une quelconque des revendications précédentes, dans lequel le traitement de données comporte, en ledit au moins un point (z) de l'axe longitudinal (Z), l'identification des pics et le calcul du nombre de pics sur le tracé de la fonction dérivée du profil, et la comparaison consiste à comparer une valeur de référence de nombre de pics calculée et la valeur du nombre de pics calculée.

7. Procédé selon l'une quelconque des revendications précédentes, dans lequel le traitement de données comporte, en ledit au moins un point (z) de l'axe longitudinal (Z), le calcul de la distance entre deux pics successifs (∆x), pour au moins une partie des pics sur le tracé de la fonction dérivée du profil, et la comparaison consiste à comparer une valeur de distance de référence calculée et la valeur des distances calculées entre les pics, deux à deux.

8. Procédé selon l'une quelconque des revendications précédentes, dans lequel l'étape de traitement de données comporte le calcul, en ledit au moins un point (z) de l'axe longitudinal (Z), de l'épaisseur du profil et l'étape de comparaison consiste à comparer une valeur d'épaisseur de référence calculée et la valeur d'épaisseur calculée.

9. Procédé selon l'une quelconque des revendications précédentes, dans lequel le traitement de données comporte, en ledit au moins un point (z), de l'axe longitudinal (Z), le calcul des valeurs de distance entre deux pics successifs (∆x) et la hauteur des marches du profil en escalier (∆y), ainsi que le calcul d'un critère (J), tel que

$$J = \sum_{pic=0}^{n}((\Delta x - \Delta x_{id})^2 - (\Delta y - \Delta y_{id})^2)$$ où $\Delta x_{id}$ et $\Delta y_{id}$ sont les valeurs de référence des distances ∆x et ∆y.

10. Procédé selon l'une quelconque des revendications précédentes, dans lequel les étapes sont répétées en au moins deux points (z) différents le long de l'axe longitudinal (Z) du bord (3) ayant un profil en escalier, voire en au moins trois points, notamment en sept points, mieux en une pluralité de points à intervalles réguliers sur toute la longueur du bord (3), de préférence prédéterminés.

11. Procédé selon la revendication précédente, dans lequel une moyenne des valeurs ou critères pour lesdits points est calculée afin d'effectuer la comparaison avec la valeur ou critère de référence correspondant.

12. Procédé selon l'une quelconque des revendications précédentes, dans lequel le formage consiste en un formage à chaud, notamment un pliage à chaud.

13. Procédé selon l'une quelconque des revendications précédentes, dans lequel la pièce en matériau composite comporte au moins dix plis drapés superposés, mieux au moins vingt plis, encore mieux au moins cinquante plis.

## Patentansprüche

1. Verfahren zur Kontrolle eines Teils (1) aus Verbundmaterial, das eine Mehrzahl von Lagen (2) aufweist, das eine Formung erfahren hat und wenigstens einen Rand (3) aufweist, der sich entlang einer Längsachse (Z) erstreckt und im Anschluss an die Formung ein Treppenprofil in einer Ebene (X, Y) aufweist, die orthogonal zur Längsachse (Z) verläuft, wobei das Verfahren die folgenden Schritte aufweist:

   a) Erfassen von Daten in Bezug auf das Treppenprofil,
   b) Berechnen, anhand der erfassten Daten, wenigstens eines Werts aus den folgenden an wenigstens einem Punkt (z) der Längsachse (Z): Winkel des Profils, Länge des Profils, Anzahl von Spitzen auf einem Verlauf der Ableitungsfunktion des Profils, Koordinaten der Spitzen auf dem Verlauf der Ableitungsfunktion des Profils, Berechnung des Abstands zwischen zwei aufeinanderfolgenden Spitzen ($\Delta x$) auf dem Verlauf der Ableitungsfunktion des Profils und Berechnung der Höhen der Spitzen, und eventuell Berechnen wenigstens eines Kriteriums auf Basis wenigstens eines dieser Werte,
   c) Vergleichen des oder der berechneten Wert(e) und/oder Kriteriums oder Kriterien und/oder eines Mittelwerts oder mehrerer Mittelwerte oder mittleren Kriteriums oder mittlerer Kriterien an mehreren Punkten (z) mit entsprechenden berechneten Referenzwerten oder - kriterien,
   d) Erzeugen einer Information zum Risiko des Vorhandenseins oder Nichtvorhandenseins von Fehlern in dem Teil (1) auf Basis des Vergleichs.

2. Verfahren nach Anspruch 1, wobei das Erfassen der Daten in Bezug auf das Treppenprofil mithilfe eines Laser-Profilometers (R) durchgeführt wird.

3. Verfahren nach Anspruch 1 oder 2 umfassend des Schritt, der nach dem Schritt a) des Erfassens darin besteht, an dem wenigstens einen Punkt (z) die geometrische Form des Profils mithilfe der erfassten Daten nachzubilden und daraus des Verlauf einer Ableitungsfunktion des Profils herzuleiten.

4. Verfahren nach einem der vorhergehenden Ansprüche, wobei die Datenverarbeitung das Berechnen, an dem wenigstens einen Punkt (z) der Längsachse (Z), des Winkels des Profils umfasst und das Vergleichen darin besteht, einen berechneten Referenzwinkelwert und den berechneten Winkelwert zu vergleichen.

5. Verfahren nach einem der vorhergehenden Ansprüche, wobei die Datenverarbeitung das Berechnen, an dem wenigstens einen Punkt (z) der Längsachse (Z), der Länge des Profils umfasst und das Vergleichen darin besteht, einen berechneten Referenzlängenwert und den berechneten Längenwert zu vergleichen.

6. Verfahren nach einem der vorhergehenden Ansprüche, wobei die Datenverarbeitung an dem wenigstens einen Punkt (z) der Längsachse (Z), das Ermitteln der Spitzen und das Berechnen der Anzahl von Spitzen auf dem Verlauf der Ableitungsfunktion des Profils umfasst und das Vergleichen darin besteht, einen berechneten Spitzenanzahl-Referenzwert und den berechneten Wert der Anzahl von Spitzen zu vergleichen.

7. Verfahren nach einem der vorhergehenden Ansprüche, wobei die Datenverarbeitung an dem wenigstens einen Punkt (z) der Längsachse (Z), das Berechnen des Abstands zwischen zwei aufeinanderfolgenden Spitzen ($\Delta x$) für wenigstens einen Anteil der Spitzen auf dem Verlauf der Ableitungsfunktion des Profils umfasst und das Vergleichen darin besteht, einen berechneten Referenzabstandswert und den Wert der berechneten Abstände zwischen den Spitzen paarweise zu vergleichen.

8. Verfahren nach einem der vorhergehenden Ansprüche, wobei der Datenverarbeitungsschritt das Berechnen, an dem wenigstens einen Punkt (z) der Längsachse (Z), der Dicke des Profils umfasst und der Schritt des Vergleichens darin besteht, einen berechneten Referenzdickenwert und den berechneten Dickenwert zu vergleichen.

9. Verfahren nach einem der vorhergehenden Ansprüche, wobei die Datenverarbeitung an dem wenigstens einen Punkt (z) der Längsachse (Z) das Berechnen der Abstandswerte zwischen zwei aufeinanderfolgenden Spitzen ($\Delta x$) und der Höhe der Stufen des Treppenprofils ($\Delta y$) sowie das Berechnen eines Kriteriums (J) umfasst, so dass J =

$$\sum_{Spitze=0}^{n}((\Delta x - \Delta x_{id})^2 - (\Delta y - \Delta y_{id})^2$$ wobei $\Delta x_{id}$ und $\Delta y_{id}$ Referenzwerte der Abstände $\Delta x$ und $\Delta y$

sind.

10. Verfahren nach einem der vorhergehenden Ansprüche, wobei die Schritte an wenigstens zwei verschiedenen Punkten (z) entlang der Längsachse (Z) des Rands (3) mit einem Treppenprofil wiederholt werden, ja sogar an wenigstens drei Punkten, insbesondere an sieben Punkten, besser noch an einer Mehrzahl von Punkten in regelmäßigen Abständen über die gesamte Länge des Rands (3), die vorzugsweise vorbestimmt sind.

11. Verfahren nach dem vorhergehenden Anspruch, wobei ein Durchschnitt der Werte oder Kriterien für die Punkte berechnet wird, um den Vergleich mit dem entsprechenden Referenzwert oder -kriterium durchzuführen.

12. Verfahren nach einem der vorhergehenden Ansprüche, wobei die Formung aus einer Warmformung, insbesondere einem Warmbiegen besteht.

13. Verfahren nach einem der vorhergehenden Ansprüche, wobei das Teil aus Verbundmaterial wenigstens zehn übereinander gelagerte drapierte Lagen, besser wenigstens zwanzig Lagen, besser noch wenigstens fünfzig Lagen aufweist.

**Claims**

1. Method for controlling the quality of a composite part (1) comprising a plurality of plies (2), having undergone forming and having at least one edge (3) extending along a longitudinal axis (Z) and having, following forming, a staircase profile in a plane (X, Y) orthogonal to the longitudinal axis (Z), the method comprising the following steps:

   a) acquiring data relative to the staircase profile,
   b) computing, on the basis of the acquired data, at least one value among the following at least at one point (z) on the longitudinal axis (Z): angle of the profile, length of the profile, number of peaks in a plot of the derivative of the profile, coordinates of the peaks in the plot of the derivative of the profile, computed distance ($\Delta x$) between two successive peaks in the plot of the derivative of the profile and computed height of said peaks, and optionally computing at least one criterion based on at least one of these values,
   c) comparing the one or more computed values and/or criteria and/or one or more average values or average criteria at a plurality of points (z) with corresponding computed reference values or criteria,
   d) generating information on the risk of the presence or absence of defects in the part (1), on the basis of said comparison.

2. Method according to Claim 1, wherein the data relative to the staircase profile are acquired using a laser profilometer (R).

3. Method according to Claim 1 or 2 comprising the step of, after the acquiring step a), reconstructing, at said at least one point (z), the geometric shape of the profile using the acquired data, and deducing therefrom the plot of a derivative of the profile.

4. Method according to any one of the preceding claims, wherein the data processing comprises computing, at said at least one point (z) on the longitudinal axis (Z), the angle of the profile and the comparison consists in comparing a computed reference-angle value and the computed angle value.

5. Method according to any one of the preceding claims, wherein the data processing comprises computing, at said at least one point (z) on the longitudinal axis (Z), the length of the profile and the comparison consists in comparing a computed reference-length value and the computed length value.

6. Method according to any one of the preceding claims, wherein the data processing comprises, at said at least one point (z) on the longitudinal axis (Z), identifying the peaks and computing the number of peaks in the plot of the derivative of the profile, and the comparison consists in comparing a computed reference-number-of-peaks value and the computed number-of-peaks value.

7. Method according to any one of the preceding claims, wherein the data processing comprises, at said at least one point (z) on the longitudinal axis (Z), computing the distance ($\Delta$x) between two successive peaks, for at least some of the peaks in the plot of the derivative of the profile, and the comparison consists in comparing a computed reference-distance value and the value of the computed distances between the peaks, pairwise.

8. Method according to any one of the preceding claims, wherein the data processing step comprises computing, at said at least one point (z) on the longitudinal axis (Z), the thickness of the profile and the comparing step consists in comparing a computed reference-thickness value and the computed thickness value.

9. Method according to any one of the preceding claims, wherein the data processing comprises, at said at least one point (z) on the longitudinal axis (Z), computing the values for the distance ($\Delta$x) between two successive peaks and the height ($\Delta$y) of the stairs of the staircase profile, and computing a criterion (J) such that $J =$
$$\sum_{peak=0}^{n}((\Delta x - \Delta x_{id})^2 - (\Delta y - \Delta y_{id})^2)$$ where $\Delta x_{id}$ and $\Delta y_{id}$ are the reference values of the distances $\Delta$x and $\Delta$y.

10. Method according to any one of the preceding claims, wherein the steps are repeated at least at two different points (z) along the longitudinal axis (Z) of the edge (3) having a staircase profile, or even at least at three points, and especially at seven points, and better still at a plurality of points at regular intervals over the entire length of the edge (3), these preferably being predetermined.

11. Method according to the preceding claim, wherein an average of the values or criteria is computed for said points in order to make the comparison with the corresponding reference value or criterion.

12. Method according to any one of the preceding claims, wherein the forming consists in hot forming, and especially of hot bending.

13. Method according to any one of the preceding claims, wherein the composite part comprises at least ten superposed draped plies, better still at least twenty plies, and even better still at least fifty plies.

[Fig. 1]

1

O

[Fig. 2]

2
2
2

[Fig. 3]

1

O

[Fig. 4]

2

3

2

2

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3043358

**Littérature non-brevet citée dans la description**

- **XAVIER TARDIF et al.** *Hot forming of Composite prepreg : experimental study*